# EUROPEAN PATENT APPLICATION

(11) **EP 2 058 975 A1**
(43) Date of publication of application: **13.05.2009**
(21) Application number: 07785419.8
(22) Date of filing: 06.08.2007
(51) Int. Cl.: H04L 12/24

(54) **METHOD FOR CONFIGURING DEVICE AND SYSTEM THEREOF**

(30) Priority: 31.08.2006 CN 200610062409
(71) Applicant: Huawei Technologies Co., Ltd., Shenzhen, Guangdong Province 518129 (CN)
(72) Inventor: YANG, Hongwen, Shenzhen Guangdong 518129 (CN)
(74) Representative: Gulde Hengelhaupt Ziebig & Schneider
(86) International application number: PCT/CN2007/070426
(87) International publication number: WO 2008/025275

(57) **Abstract**

A method for configuring a device includes: receiving and demodulating, by an RF processing module, an RF signal comprising configuration data, and storing the configuration data demodulated; reading, by the device to be configured, the configuration data stored in the RF processing module and processing according to the configuration data. An apparatus and system for configuring a device is further disclosed. When configuring devices according to the present invention, it is not necessary to power on the device and not necessary to establish a physical connection between a computer and a device by the user, that is, it is not necessary to touch the device, which makes it possible to configure a packed device without unpacking, and thus the efficiency of configuring the device can be improved.

## Description

### FIELD OF THE INVENTION

The present invention relates to device management and in particular to technology for configuring a device.

### BACKGROUND

With development of communication technologies, communication devices are undergoing continuous development as well, with the level of intelligence of the communication devices improved gradually. Configuration of the communication devices before their operation is an important step, especially for terminal devices. Configuration of terminal devices should be paid more attention to in terminal device management.

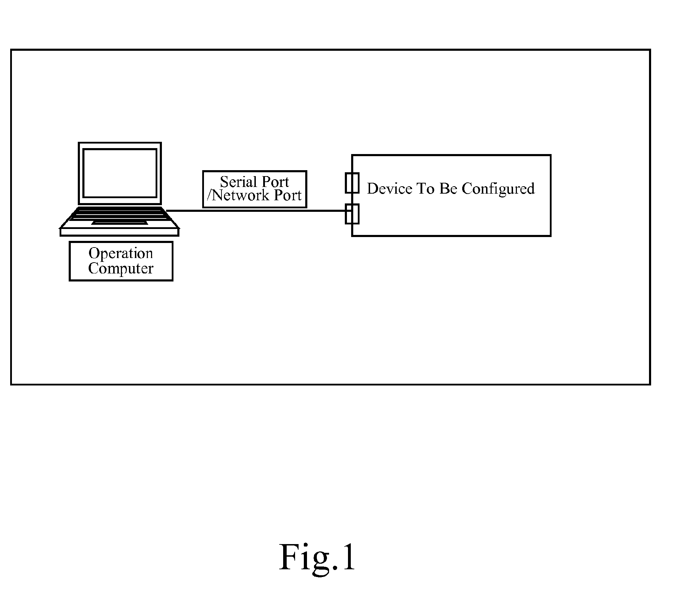

One of the existing schemes for configuring a device is a manual configuration as shown in Fig.1.

A device to be configured is powered on, and a serial port of the device is enabled.
A serial port of a computer is connected to the serial port of the device using a serial bus. A suitable baud rate is set in the computer. Commands can be fed to the device to be configured through a super terminal program in the computer. A command processing module within the device to be configured performs processing according to information input by a user for completing data configuration.

A specific mode of the manual configuration scheme may include a serial port configuration. For example, if the user needs to configure the serial number of the device, the user can input a command "set serial umber (12345678-001)" from the computer. After receiving the command, the device parses the command and knows that the serial number of the device be set to 12345678-001. The device then stores the serial number input by the user and the configuration is completed.

There are other modes of manual configuration scheme, for example, Telnet configuration. The Telnet configuration is similar to the serial port configuration. The device to be configured may preset a fixed IP address such as 192.168.0.1. The computer is set to be in the same network segment as the device, for example, 192.168.0.2. The network port of the computer is connected to that of the device using a network cable. The user inputs a command "telnet 192.168.0.1" at the console of the computer. A telnet module of the device is adapted to interact and negotiate with the computer to establish a connection. After establishing the connection, the user can input commands to configure the device. The rest of the procedure is the same as the serial port configuration.

It takes up lots of manpower, physical resources and is highly mistake-prone to make configurations by direct logging in the devices using traditional manual configuration, because there are a numerous number of communication devices.

An existing automatic configuration scheme may partially solve the problem of the above-mentioned manual configuration. The automatic configuration involves constructing an automatic configuration server (ACS). When a terminal device starts up, it connects to the ACS automatically to acquire corresponding configuration. Existing automatic configuration schemes assume that the terminal devices have been provided with the address of the ACS or have acquired the address of the ACS by other means and can communicate with the ACS normally.

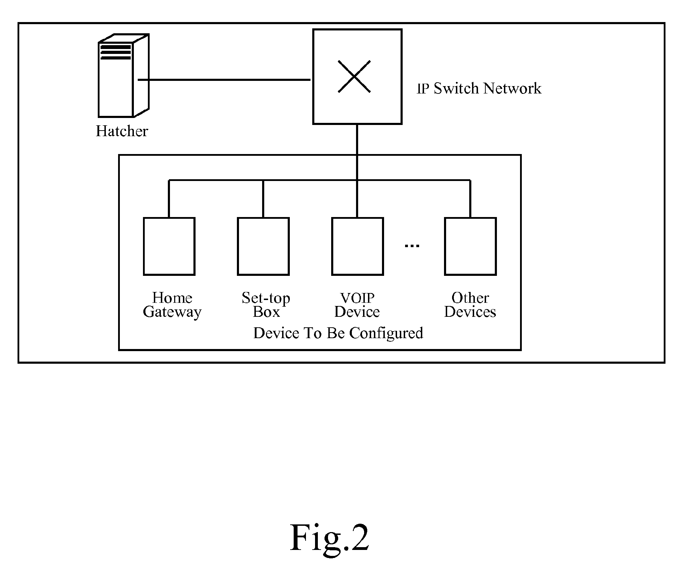

A typical example of automatic configuration schemes is to configure devices in batches using a hatcher, as shown in Fig. 2.

The hatcher comprises a computer and a database system. The device to be configured is connected to a network through a network port. When there is a Dynamic Host Configuration Protocol (DHCP) server in the network, the device to be configured can access the network using DHCP. A user stores device data in the hatcher first. There is an internally-set default hatcher IP address or domain name (dynamic DNS server required) in each terminal device, and each terminal device can be identified by a unique identification such as its serial number and MAC address. After powered on, each terminal device transmits a configuration request message including device identification to the hatcher via the network. The hatcher finds matching configuration information according to the device identification and transmits the matched configuration information to the device. A hatcher client terminal in the device parses the configuration information to accomplish the configuration.

The above-mentioned manual configuration and automatic configuration schemes have the following disadvantages:

1. Configuration can be done only when the device is powered on and has started up.

2. The user has to make physical connection between the computer and the device, which is complicated.

3. The device has to be touched. The device has to be unpacked if packed.

Moreover, the above manual configuration scheme requires human participation, and only one device is configured at one time, which causes low efficiency.

### SUMMARY

An objective of the present invention is to provide a method and system for configuring a device, so as to solve the problem of complicated operation and low efficiency of configuration schemes in the prior art.

The following technical solutions are proposed for the above purpose:

A method for configuring a device includes: receiving and demodulating, by an RF processing module, an RF signal comprising configuration data, storing the configuration data demodulated; and reading, by a device to be configured, the configuration data demodulated stored in the RF processing module and processing according to the configuration data demodulated.

The present invention also provides a system for configuring a device. The system includes a device to be configured, and the system further includes: an RF read-write device adapted to modulate configuration data of the device to be configured on an RF signal and transmit the modulated RF signal; and an RF processing module adapted to receive the RF signal transmitted by the RF read-write device and demodulate the configuration data of the device to be configured from the RF signal received. The device to be configured is adapted to read the configuration data from the RF processing module for processing.

The present invention also provides an apparatus for configuring a device. The apparatus includes an RF antenna, an RF intelligent control module and an internal memory. The RF antenna is adapted to receive an RF signal comprising configuration data of a device to be configured; the RF intelligent control module is adapted to demodulate the RF signal comprising the configuration data which is received by the RF antenna, and store the configuration data demodulated in the internal memory; and the internal memory is adapted to store the configuration data demodulated by the RF intelligent control module.

In the present disclosure, the configuration data of the device to be configured is modulated on the RF signal. After receiving the RF signal, the RF processing module in the device to be configured demodulates the configuration data and stores the configuration data demodulated in an internal memory of the RF processing module. When the device to be configured is powered on, it reads out the configuration data in the internal memory of the RF processing module for configuration. When a device is configured according to the present invention, it is not necessary to physically connect the device to be configured with other devices, thus it is not necessary to touch the device to be configured. Even if the device is packed, configuration can be accomplished without unpacking, so that the configuration efficiency can be greatly improved.

### BRIEF DESCRIPTION OF THE DRAWING(S)

Figure 1 is a schematic diagram of configuring a device using a serial port in the prior art;

Figure 2 is a schematic diagram of configuring a device using a hatcher in the prior art;

Fig. 3 is a block diagram of a system according to an embodiment of the present invention; and

Fig. 4 is a flow chart according to an embodiment of the present invention.

### DETAILED DESCRIPTION

According to an embodiment of the present invention, an RF processing module including an RF antenna, an RF intelligent control module and a writable memory is set in a device to be configured. When the device to be configured is not powered on, an alternating magnetic field of an external RF read-write device causes the RF antenna inside the device to generate an alternating current for supplying power to the RF intelligent control module. The RF read-write device acquires configuration data from a data configuration server and modulates the configuration data on an RF signal for transmission. The RF intelligent control module demodulates the configuration data from the RF signal and stores the configuration data demodulated in the memory which is inside the RF processing module. After the device to be configured is powered on, a CPU of the device to be configured accesses the memory which is inside the RF processing module through the intelligent control module via an interface circuit, so as to read out data stored in the memory which is inside the RF processing module for processing.

The present invention is discussed in detail by reference to the accompanying figures and embodiments as follows.

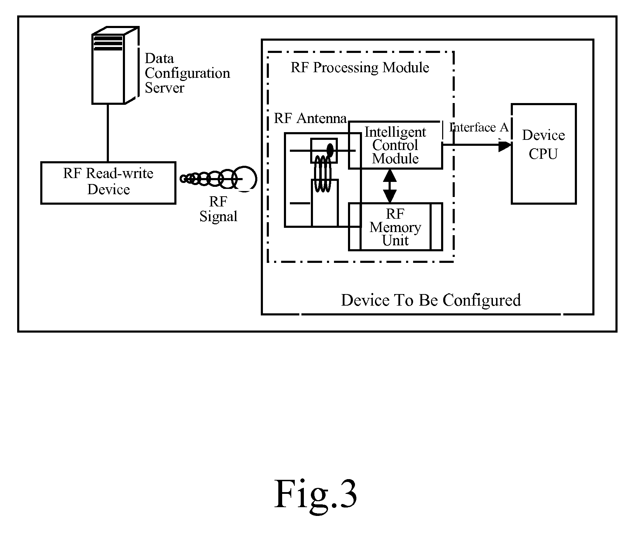

A device configuration system according to an embodiment of the present invention is shown in Fig. 3, which includes:

a data configuration server, adapted to store configuration data of the device to be configured;

an RF read-write device, adapted to exchange information with an RF processing module inside the device to be configured using an RF signal, and interact with the data configuration server; and,

The device to be configured which includes an RF processing module and a device CPU, the RF processing module includes an RF antenna, an intelligent control module and an RF memory unit. The RF antenna receives an RF signal from the RF read-write device and provides the intelligent control module with an operating current. The RF signal includes a clock signal and modulated configuration data. The intelligent control module is adapted to demodulate the configuration data from the RF signal transmitted by the RF read-write device. The RF memory unit is adapted to store the configuration data demodulated by the intelligent control unit. The device CPU is adapted to connect with the RF processing module through an interface to access information in the RF memory unit inside the RF processing module.

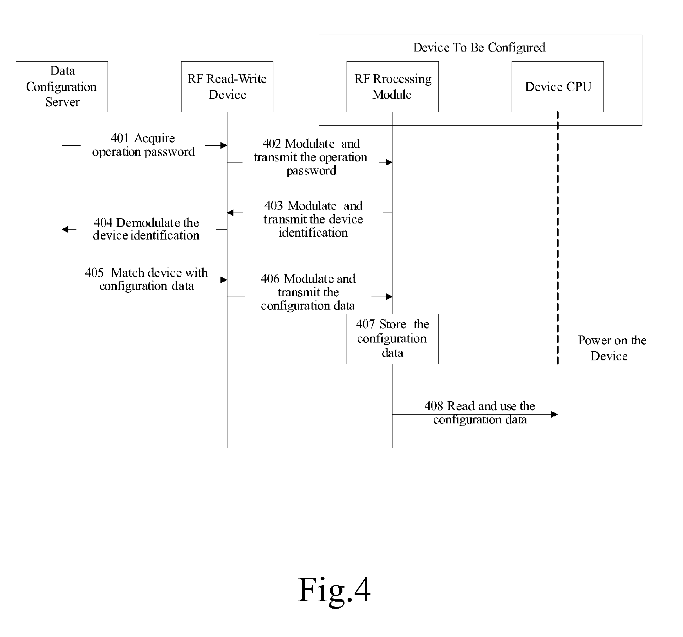

A flow chart of configuring the device to be configured using the above system is shown in Fig. 4, which includes the following steps:

Step 401: The configuration data is first stored in the data configuration server. For different devices to be configured, the configuration data includes identification information of the individual device to be configured. The identification information is prewritten in the RF memory unit according to a rule.

Step 402: The external RF read-write device generates an alternating magnetic field, which causes the internal RF antennal of the device to produce a current for supplying power to the intelligent control module.

Step 403: The intelligent control module, driven by the current provided by the RF antenna, reads out device identification from the RF memory unit of the device to be configured, modulates the device identification on the RF signal and transmits the modulated RF signal to the RF read-write device. The RF read-write device then demodulates the device identification from the RF signal, thereby accomplishing the reading of the device identification.

For security reasons, the intelligent control module may perform password verification. Before configuring the device, the RF read-write device transmits an operating password to the intelligent control module via the RF signal. The intelligent control module checks whether the password is the same as an internal operating password. If the passwords do not match, the intelligent control module refuses to configure the device.

Step 404: After acquiring the device identification of the device to be configured, the RF read-write device passes the device identification to the data configuration server. The data configuration server acquires configuration data which matches the device to be configured according to the device identification of the device to be configured.

Step 405: The data configuration server transmits the configuration data which matches the device to be adapted to the RF read-write device, and the RF read-write device modulates the configuration data on the RF signal for transmission.

Step 406: The device to be configured obtains the RF signal through the RF antenna. The intelligent control module of the device to be configured demodulates the configuration data from the RF signal and writes the configuration data in the RF memory unit.

Step 407: When the device is powered on, the CPU of the device to be configured reads the configuration data from the RF memory unit through an interface A for processing.

The RF processing module may also be an RF processing intelligent card separated from the device to be configured. The RF processing intelligent card provides corresponding contacts, and the device to be configured provides an intelligent card slot and an interface circuit. Thus, the configuration of the device to be configured is changed to configuration of the RF processing intelligent card. And the RF processing intelligent card is inserted into the device to be configured after configuration. The device to be configured connects with the RF processing intelligent card via the interface circuit and the contacts of the RF processing intelligent card to accesses configured data inside the RF processing intelligent card.

As seen from the above embodiments, the configuration data of the device to be configured is modulated on the RF signal using the RF read-write device, the RF processing module in the device to be configured demodulates the RF signal after receiving the RF signal to acquire the configuration data and stores the configuration data in the internal memory of the RF processing module; the RF processing module is powered by an induced current. When the device to be configured is powered on, the configuration data in the internal memory of the RF processing module is read out for processing. According to the present disclosure, it is not necessary to power on the device when configuring the device, nor is it necessary to establish a physical connection between a computer and a device by the user. Therefore, it is not necessary to touch the device, which makes it possible to configure a packed device without unpacking. And efficiency of device configuration is greatly improved.

The above are merely exemplary embodiments of the present invention, which are not intended to limit the present invention. Any modification, replacement and improvement within the spirit and principle of the present invention are in the scope of protection of the present invention.

## Claims

1. A method for configuring a device, comprising:
receiving and demodulating, by an RF processing module, an RF signal comprising configuration data, storing the configuration data demodulated; and
reading, by a device to be configured, the configuration data demodulated stored in the RF processing module and processing according to the configuration data demodulated.

2. The method of claim 1, further comprising:
before receiving the RF signal by the RF processing module, obtaining, by an RF read-write device, the configuration data from a data configuration server and modulating the configuration data on the RF signal for transmission.

3. The method of claim 2, wherein the obtaining the configuration data from the data configuration server by the RF read-write device comprises:
obtaining, by the RF read-write device, an RF signal transmitted by the RF processing module and demodulating a device identification of the device to be configured from the RF signal; and
obtaining, by the RF read-write device, the configuration data which matches the device identification from the data configuration server, according to the device identification of the device to be configured.

4. The method of claim 1, wherein the method further comprises:
before receiving the RF signal by the RF processing module, electromagnetically inducing a current in an RF antenna of the RF processing module by an external alternating magnetic field to supply power to an RF intelligent control module of the RF processing module.

5. The method of claim 1, wherein the receiving and demodulating the RF signal comprising configuration data and storing the configuration data demodulated by the RF processing module comprises:
receiving, by the RF antenna of the RF processing module, the RF signal transmitted by the RF read-write device; and
demodulating, by the intelligent control module of the RF processing module, the configuration data of the RF signal and writing the configuration data demodulated in an internal memory of the RF processing module.

6. The method of claim 5, further comprising:
before receiving and demodulating the RF signal comprising the configuration data by the RF processing module, checking, by the intelligent control module of the RF processing module, whether the RF read-write device has a permission to operate the device to be configured by means of a password; and
performing the subsequent steps if the RF read-write device has a permission to operate the device to be configured; ending the method if the RF read-write device has not a permission to operate the device to be configured.

7. The method of any of claims 1 to 6, wherein the reading the configuration data stored in the RF processing module by the device to be configured comprises:
obtaining, by a processor of the device to be configured, the configuration data from the internal memory of the RF processing module, when the device to be configured is powered on.

8. A system for configuring a device, comprising a device to be configured, wherein the system further comprises:
an RF read-write device adapted to modulate configuration data of the device to be configured on an RF signal and transmit the modulated RF signal; and
an RF processing module adapted to receive the RF signal transmitted by the RF read-write device and demodulate the configuration data of the device to be configured from the RF signal received;
wherein the device to be configured is adapted to read the configuration data from the RF processing module for processing.

9. The system of claim 8, further comprising: a data configuration server adapted to store the configuration data of the device to be configured;
wherein the RF read-write device is further adapted to obtain the configuration data of the device to be configured from the data configuration server.

10. The system of claim 8, wherein
the RF read-write device is further adapted to generate an alternating magnetic field; and
the RF processing module is powered by an induced current generated inside the RF processing module influenced by the alternating magnetic field generated in the RF read-write device.

11. An apparatus for configuring a device, comprising: an RF antenna, an RF intelligent control module and an internal memory; wherein
the RF antenna is adapted to receive an RF signal comprising configuration data of a device to be configured;
the RF intelligent control module is adapted to demodulate the RF signal comprising the configuration data which is received by the RF antenna, and store the configuration data demodulated in the internal memory; and
the internal memory is adapted to store the configuration data demodulated by the RF intelligent control module.

12. The apparatus of claim 11, wherein the RF antenna is further adapted to generate an induced current influenced by an alternating magnetic field to supply the induced current to the RF intelligent control module.

13. The apparatus of claim 11 or 12, wherein the apparatus is an RF processing intelligent card connected to the device to be configured via a slot and an interface circuit.
